Europäisches Patentamt

European Patent Office

Office européen des brevets

(19)

(11)  **EP 0 928 729 B1**

(12)  **EUROPÄISCHE PATENTSCHRIFT**

(45) Veröffentlichungstag und Bekanntmachung des Hinweises auf die Patenterteilung:
**06.11.2002  Patentblatt 2002/45**

(51) Int Cl.⁷: **B60T 8/00**, B60T 13/40

(21) Anmeldenummer: **98810011.1**

(22) Anmeldetag: **13.01.1998**

(54) **Verfahren zum Betrieb einer Bremseinrichtung eines Schienenfahrzeuges und Bremseinrichtung zur Durchführung des Verfahrens**

Operating method for a rail vehicle brake device and brake device therefor

Méthode d'opération d'un dispositif de freinage d'un véhicule ferroviaire et dispositif de freinage pour la réalisation de cette méthode

(84) Benannte Vertragsstaaten:
**AT CH DE ES FR GB IT LI SE**

(43) Veröffentlichungstag der Anmeldung:
**14.07.1999  Patentblatt 1999/28**

(73) Patentinhaber: **DaimlerChrysler Rail Systems GmbH**
**13627 Berlin (DE)**

(72) Erfinder: **Chothutshang, Lhoden**
**8404 Winterthur (CH)**

(74) Vertreter: **Cohausz & Florack**
**Postfach 33 02 29**
**40435 Düsseldorf (DE)**

(56) Entgegenhaltungen:
**EP-A- 0 410 145      DE-A- 3 803 639**
**GB-A- 2 212 572**

**Beschreibung**

Die Erfindung betrifft ein Verfahren zum Betrieb einer Bremseinrichtung entsprechend dem Oberbegriff des Patentanspruchs 1 und eine Bremseinrichtung zur Durchführung des Verfahrens.

Bremseinrichtungen der genannten Art sind in zahlreichen Ausführungen bekannt, z.B. für Güterwagen und/oder als Notbremssysteme für Lokomotiven, mit mechanischen Bremsaggregaten, welche für eine zum Anhalten des Fahrzeuges erforderliche Gesamtbremskraft oder für einen Teil dieser Gesamtbremskraft ausgelegt sein können. Derartige Bremseinrichtungen sind üblicherweise mit Bremsklötzen aus Grauguss ausgeführt, welche mit einer mit der Radsatzachse gekoppelten Bremstrommel, einer Bremsscheibe oder jeweils mit einer Lauffläche eines Schienenrades zusammenwirken. Dabei ist die jeweils erzielbare Reibleistung in hohem Masse abhängig von der jeweiligen Fahrgeschwindigkeit und von der über den Bremsklotz auf die Bremsfläche ausgeübten Anpresskraft, da bei der innerhalb von einigen Sekunden aufzubringenden Bremskraft der Reibungskoeffizient zwischen Bremsfläche und Bremsklotz mit zunehmender Umfangsgeschwindigkeit kontinuierlich abnimmt. Entsprechend werden bei bisherigen Bremseinrichtungen die Bremsaggregate so angesteuert, dass bei einer maximalen Fahrgeschwindigkeit des Schienenfahrzeuges von z.B. 130 km/h nur während einer Anfangsphase, z.B. während der ersten vier Sekunden des Bremsvorganges, eine maximal zulässige Anpresskraft auf die Bremsfläche übertragen wird und anschliessend die Anpresskraft reduziert wird, wobei der Reibungskoeffizient zwischen Bremsfläche und Bremsklotz entsprechend wieder zunimmt und mit der reduzierten Anpresskraft die zum Anhalten des Fahrzeuges erforderliche Bremskraft ergibt. Dabei tritt, insbesondere während der Anfangsphase des Bremsvorganges, ein relativ hoher spezifischer Verschleiss der aus Grauguss bestehenden Bremsklötze auf, so dass diese eine entsprechend geringe Standzeit aufweisen. Ferner ergeben sich, über den gesamten Bremsvorgang gesehen, jeweils relativ tiefe mittlere Reibwerte, welche entsprechend hohe Anpresskräfte und damit die Verwendung relativ grosser Bremsaggregate erfordern. Bei Bremseinrichtungen mit auf die Laufflächen der Schienenräder einwirkenden Grauguss-Bremsklötzen können zudem, insbesondere bei hohen Fahrgeschwindigkeiten, infolge der Aufrauhung der Laufflächen störende Rollgeräusche entstehen.

Es sind auch Bremseinrichtungen mit Bremsklötzen aus einem Sinterwerkstoff oder Kunststoff bekannt, welche sich, im Vergleich zu Grauguss-Bremsklötzen, durch einen wesentlich höheren, von der Umfangsgeschwindigkeit der Bremsfläche weitgehend unabhängigen Reibwert sowie durch einen wesentlich tieferen spezifischen Verschleiss und damit durch eine entsprechend grössere Standzeit auszeichnen, und welche keine nennenswerte Aufrauhung der Bremsfläche, und daher entsprechend geringe Lärmemissionen verursachen. Bei bisherigen Bremseinrichtungen, insbesondere solchen mit auf die Laufflächen der Schienenräder einwirkenden Bremsaggregaten, hat sich die Verwendung derartiger Bremsklötze jedoch wenig bewährt, da, insbesondere bei mittleren und höheren Fahrgeschwindigkeiten, im Reibkontakt zwischen Schienenrad und Bremsklotz zu hohe Reibleistungen erzeugt werden. Derartige, hohe Reibleistungswerte können die an die Lauffläche anschliessenden Zonen des Schienenrades thermisch überbeanspruchen, so dass schon nach kurzer Einsatzdauer Beschädigungen, z.B. Risse im Radkranzbereich, auftreten können, welche im Interesse der zu gewährleistenden Sicherheit des Fahrzeuges vermieden werden müssen.

Dokument GB-A-2 212 572 offenbart ein Verfahren gemäß dem Oberbegriff des Anspruchs 1.

Der Erfindung liegt die Aufgabe zugrunde, ein insbesondere in dieser Hinsicht verbessertes Verfahren zum Betrieb einer Bremseinrichtung der eingangs genannten Art zu schaffen, bei welchem die genannten Nachteile der bekannten Ausführungen nicht auftreten.

Diese Aufgabe wird erfindungsgemäss mit den Merkmalen der Patentansprüche 1 oder 5 gelöst.

Das erfindungsgemässe Verfahren gestattet einen sicheren Einsatz von Bremsklötzen aus einem Sinter- und/oder Kunststoffmaterial unter Einhaltung einer für jeweils eine Bremseinheit vorbestimmten, maximal zulässigen thermischen Bremsleistung, die gleich oder kleiner ist als das Produkt aus einer der jeweiligen Fahrgeschwindigkeit entsprechenden Umlaufgeschwindigkeit der Bremsfläche und einer vorbestimmten maximalen Bremskraft, die dem Produkt aus der Anpresskraft des Bremsklotzes und dem im wesentlichen konstanten Reibungskoeffizienten zwischen der Bremsfläche und dem Bremsklotz entspricht. Durch die erfindungsgemässe Ansteuerung der Betätigungseinrichtungen der Bremsaggregate ist eine sowohl die Bremsflächen als auch den Bremsklötzen schonende Bremsung des Fahrzeuges erzielbar. Dabei können insbesondere im Vergleich zu Ausführungen mit Grauguss-Bremsklötzen, die Bremsaggregate für kleinere Bremsdrücke ausgelegt und entsprechend kleiner dimensioniert werden, wodurch jeweils eine kürzere Ansprechzeit der Bremsaggregate erzielt und damit eine Verkürzung der für das Anhalten des Fahrzeuges erforderlichen Zeitspanne erreicht werden kann. Es hat sich gezeigt, dass auf diese Weise durch die beim Beginn des Bremsvorganges auf die Bremsfläche ausgeübte, entsprechend der jeweiligen Anfangsgeschwindigkeit auf einen Bruchteil eines vorbestimmten Maximalwertes reduzierte Anpresskraft bereits nach wenigen Sekunden eine vorbestimmte reduzierte Fahrgeschwindigkeit erreicht werden kann, welche eine Erhöhung der Anpresskraft auf den vorgesehenen Maximalwert gestattet, der auch während der Endphase des Bremsvorganges eine rasche Reduktion der Fahrgeschwindigkeit bis zum Stillstand des Fahrzeuges ermöglicht. Entsprechend kann auch bei hohen Fahrgeschwindigkeiten eine sichere und zugleich verschleissarme Bremsung des Fahrzeuges unter Einhaltung der vorbestimmten, zulässigen maximalen Bremsleistung sowie unter Beachtung der einzuhaltenden Bremswege gewährleistet werden.

Ausgestaltungen der Erfindung sind in den abhängigen Patentansprüchen angegeben.

Eine Bremseinrichtung zur Durchführung des erfindungsgemässen Verfahrens ist Gegenstand des Anspruchs 5.

Die Erfindung wird anhand von in der Zeichnung schematisch dargestellten Ausführungsbeispielen erläutert. Es zeigen:

Fig.1 ein mit einer erfindungsgemässen Bremseinrichtung versehenes Schienenfahrzeug in einer Teilansicht,

Fig.2 ein Schema der Bremseinrichtung nach Fig.1,

Fig.3 eine graphische Darstellung eines Bremsvorganges nach dem erfindungsgemässen Verfahren,

Fig.4 eine graphische Darstellung eines Bremsvorganges nach einer abgewandelten Ausführungsform des erfindungsgemässen Verfahrens, und

Fig.5 ein Schema einer Bremseinrichtung nach einer anderen Ausführungsform.

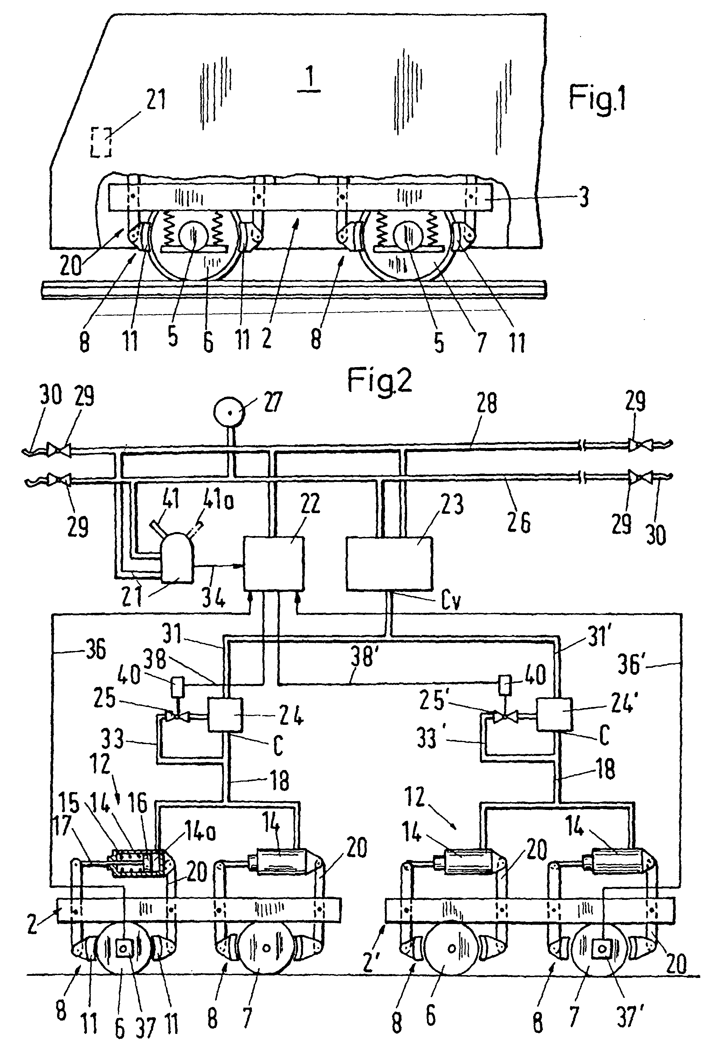

Fig.1 zeigt ein Schienentriebfahrzeug mit einem Fahrzeugkasten 1 und zwei Drehgestellen 2 und 2', von denen nur eines dargestellt ist. Anstelle derartiger Drehgestelle können auch andere Fahrwerke in beliebiger Bauweise vorgesehen sein. Die Drehgestelle 2 und 2' enthalten je einen Rahmen 3, der auf seitlichen Achslagern 5 zweier Radsätze 6 und 7 abgestützt ist. Die Radsätze 6 und 7 sind je mit einer Bremseinrichtung versehen, die zwei mechanische Bremsaggregate 8 eines Notbremssystems sowie weitere, nicht dargestellte Bremsaggregate, z.B. je eine Motorbremse eines Betriebsbremssystems, enthält.

Die Bremsaggregate 8 enthalten je zwei Bremsklötze 11 aus einem Sinterwerkstoff, welche über eine Betätigungsvorrichtung 12 gegen eine Bremsfläche, darstellungsgemäss die Lauffläche eines der Räder des betreffenden Radsatzes 6 bzw. 7, anpressbar sind. Es sind auch Ausführungen von Bremsaggregaten mit mehreren, z.B. vier, Bremsklötzen oder mit je einem Bremsklotz möglich. Nach einer anderen Ausführungsform können entsprechende Bremsklötze 11 auch mit einer Bremstrommel oder einer Bremsscheibe zusammenwirken. Entsprechende Bremsklötze können auch aus einem Kunststoff oder einer Kombination aus einem Sinter- und einem Kunststoffmaterial gefertigt sein. Gemäss Fig.2 enthalten die Betätigungsvorrichtungen 12 je einen pneumatischen Bremszylinder 14 mit einem an eine Betätigungsleitung 18 anschliessbaren Druckraum 14a und einen durch eine Druckfeder 15 belasteten Kolben 16 mit einer die Druckfeder 15 durchsetzenden Kolbenstange 17. Der Zylinder 14 und die Kolbenstange 17 sind über ein am Drehgestellrahmen 3 gehaltenes, in den Fig.1 und 2 vereinfacht dargestelltes Bremsgestänge 20 mit den dem betreffenden Rad zugeordneten Bremsklötzen 11 gekoppelt.

Die vereinfachte Darstellung der Bremseinrichtung nach Fig.2 zeigt eine in einem Führerstand des Fahrzeuges angeordnete Führerbremsanlage 21, eine elektropneumatische Steuereinheit 22, die einen Fahrzeugleitrechner enthalten kann, und eine Steuereinrichtung 23 mit mehreren, nicht dargestellten Steuerelementen sowie zwei Druckübersetzer 24 und 24', welche je einem der Drehgestelle 2 bzw. 2' zugeordnet sind. Die Führerbremsanlage 21 und die Steuereinrichtung 23 sind je an eine Zweigleitung einer über die Länge des Fahrzeuges durchgehenden Speiseleitung 26 angeschlossen, welche mit einer Druckmittelquelle, z.B. einem Vorratsbehälter 27 für Druckluft, in Verbindung steht. Die Führerbremsanlage 21, die Steuereinheit 22 und die Steuereinrichtung 23 sind ferner je an eine Zweigleitung einer über die Länge des Fahrzeuges durchgehenden Hauptleitung 28 angeschlossen. Die Speiseleitung 26 und die Hauptleitung 28 sind beidenends je mit einem Absperrhahn 29 und einer an eine entsprechende Speise-bzw. Hauptleitung eines zweiten Schienenfahrzeuges anschliessbaren Schlauchkupplung 30 versehen.

Die Druckübersetzer 24 und 24' sind je mit einem Umschaltventil 25 bzw. 25' verbunden und je über eine Verbindungsleitung 31 bzw. 31' an die Steuereinrichtung 23, sowie über eine der beiden Betätigungsleitungen 18 an die dem betreffenden Drehgestell 2 bzw. 2' zugeordneten Bremszylinder 14 angeschlossen. Die Umschaltventile 25 und 25' sind je mit einem Stellantrieb 40 bzw. 40' versehen und je über eine Bypassleitung 33 bzw. 33' an die zugehörige Betätigungsleitung 18 angeschlossen. Es sind zahlreiche Ausführungen von Stellantrieben 40, 40' bekannt. Beim dargestellten Beispiel können entsprechende elektromagnetische Ausführungen vorgesehen sein.

Auf dem Triebfahrzeug wird Druckluft mit einem Speisedruck von ca. 8 bis 10 bar erzeugt und im Vorratsbehälter 27 gespeichert. Die Führerbremsanlage 21 ist über einen Schalthebel 41 betätigbar, der über Zwischenstellungen zwischen einer mit vollen Linien dargestellten, ein Lösen der Bremsen zulassenden Lösestellung und einer strichpunktiert dargestellten, eine Aktivierung der Bremsaggregate 8 zulassenden Bremsstellung 41a verstellbar ist. Von der Führerbremsanlage 21 werden der jeweiligen Stellung des Schalthebels 41 entsprechende elektrische Steuersignale über eine Signalleitung 34 an die Steuereinheit 22 übertragen, über welche in der Hauptleitung 28 ein vorbestimmter Druck eingestellt wird.

Bei einer über die Führerbremsanlage 21 eingeleiteten Bremsung wird über die Hauptleitung 28 und die Steuereinrichtung 23 in den Verbindungsleitungen 31 und 31' ein entsprechend den jeweiligen Steuersignalen der Führerbremsanlage 21 einstellbarer, variabler Vorsteuerdruck Cv aufgebaut, der z.B auf 3,8 bar begrenzt sein kann. Mittels der Druckübersetzer 24 bzw. 24' werden die Bremszylinder 14 der Drehgestelle 2 bzw. 2', in Abhängigkeit vom jeweiligen Vorsteuerdruck Cv, je über die zugehörige Betätigungsleitung 18 mit einem Bremszylinderdruck C angesteuert, welcher einer vorbestimmten, über die Bremsklötze 11 auf das betreffende Rad zu übertragenden Anpresskraft entspricht. Gemäss Fig. 2 ist der zu erzeugende Bremszylinderdruck C zusätzlich in Abhängigkeit von der jeweiligen Fahrgeschwindigkeit des Fahrzeuges variierbar. Dabei werden Signale von mehreren, darstellungsgemäss von zwei je die Drehzahl einer Radsatzachse eines der Drehgestelle 2 bzw. 2' erfassenden Sensoren 37 und 37' über Signalleitungen 36 bzw. 36' auf die Steuereinheit 22 übertragen, jeweils mit mehreren, je einer vorbestimmten Geschwindigkeit entsprechenden Sollwerten verglichen und zu Steuersignalen verarbeitet. Es sind auch Ausführungen möglich, bei denen jeweils nur ein entsprechender Sensor 37 bzw. 37' vorgesehen ist. Die Steuersignale werden beim Erreichen bzw. Überschreiten des betreffenden Sollwerts über die Steuerleitungen 38 und 38' auf die Stellantriebe 40 bzw. 40' übertragen, durch welche die Umschaltventile 25 bzw. 25' so verstellt werden können, dass die Aussteuercharakteristik des betreffenden Druckübersetzers 24 bzw. 24' im Anschlussbereich der Betätigungsleitung 18, und damit der Bremsdruck C, verändert wird.

Die jeweils auftretende Bremsleistung pro Rad ergibt ein direktes Mass für die thermische Beanspruchung des Radkranzes. Über die Steuereinheit 22 wird der Bremsdruck C so gesteuert, dass während des Bremsvorganges eine vorbestimmte, zulässige Bremsleistung entsprechend der folgenden Beziehung nicht überschritten wird:

$$P_{max} \leq v \cdot F \cdot \mu \, ,$$

worin

$P_{max}$ =     eine maximal zulässige Bremsleistung,
$v$ =     die jeweilige Fahrgeschwindigkeit,
$F$ =     die aus dem jeweiligen Bremsdruck C resultierende Anpresskraft (Normalkraft) des Bremsklotzes,
$\mu$ =     der Reibungskoeffizient zwischen Bremsklotz und Rad.

Bei der Verwendung von Bremsklötzen aus einem Sinter- und/oder Kunststoffmaterial mit einem von der jeweiligen Geschwindigkeit weitgehend unabhängigen, im wesentlichen konstanten Reibungskoeffizienten $\mu$ kann somit jedem Sollwert der Fahrgeschwindigkeit v ein bestimmter Bremsdruck C zugeordnet, und damit eine Anpresskraft F erzeugt werden, welche in jeder Phase des Bremsvorganges die Ausübung der entsprechenden Bremskraft unter Einhaltung der zulässigen maximalen Bremsleistung $P_{max}$ gewährleistet.

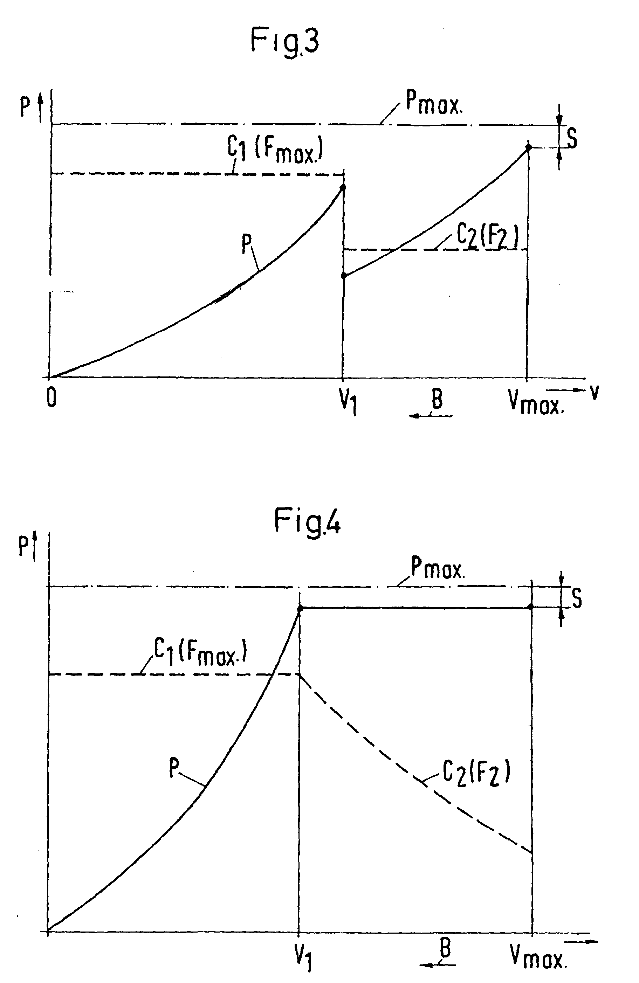

Für die je zur Ausübung einer vorbestimmten maximalen Bremskraft ausgelegten Bremsaggregate 8 sind in Fig.3 ein Verlauf der Bremsleistung P pro Rad während eines nach dem erfindungsgemässen Verfahren ausgeführten Bremsvorganges und ein stufenweiser Verlauf des entsprechenden Bremsdrucks C in Abhängigkeit von der jeweiligen Fahrgeschwindigkeit v dargestellt. Entsprechend dieser Darstellung wird während einer Anfangsphase des Bremsvorganges in den Bremszylindern 14 ein über die Steuereinheit 22 vorgesteuerter Bremsdruck $C_2$ erzeugt, der einem vorbestimmten Bruchteil, z.B. 60 %, eines für die Erzeugung einer vorbestimmten, maximalen Anpresskraft $F_{max}$ erforderlichen Bremsdrucks $C_1$ entspricht. Der reduzierte Bremsdruck $C_2$ wird so eingestellt, dass die aus der entsprechend reduzierten Anpresskraft $F_2$ und der höchsten Fahrgeschwindigkeit $v_{max}$, z.B. bei ca.130 km/h, sich ergebende Bremsleistung P gleich oder, wie dargestellt, um einen Sicherheitsfaktor S kleiner ist als die strichpunktiert angedeutete, maximal zulässige Bremsleistung $P_{max}$.

Darstellungsgemäss kann der Bremsdruck $C_2$ während der Anfangsphase des Bremsvorganges, z.B. während zwölf Sekunden, konstant gehalten werden, bis eine vorbestimmte, reduzierte Fahrgeschwindigkeit $v_1$, z.B. ca. 50 km/h, erreicht ist, wobei die Bremsleistung P kontinuierlich auf einen entsprechend reduzierten Wert abnimmt. Beim Erreichen der Fahrgeschwindigkeit $v_1$ wird über die Steuereinheit 22 der erhöhte Bremsdruck $C_1$ erzeugt, der beim angenommenen Beispiel der vorbestimmten maximalen Anpresskraft $F_{max}$ des Bremsklotzes 11 entspricht, wobei die Bremsleistung P auf einen entsprechenden Zwischenwert erhöht wird. Darstellungsgemäss kann auch der Bremsdruck $C_1$ während der Endphase des Bremsvorganges konstant gehalten werden, wobei die Bremsleistung P bis zum Stillstand des Fahrzeuges entsprechend kontinuierlich abnimmt.

Nach einer anderen Ausführungsform des erfindungsgemässen Verfahrens, z.B. bei Fahrzeugen mit Fahrgeschwindigkeiten von 200 km/h und mehr, kann der in der Anfangsphase des Bremsvorganges reduzierte Bremsdruck $C_2$ auch in zwei oder mehreren Stufen auf den Endbremsdruck $C_1$ erhöht werden.

Gemäss Fig.4 kann der entsprechend der Höchstgeschwindigkeit $v_{max}$ auf einen Bruchteil, z.B. ca. 30%, des maximalen Endbremsdrucks $C_1$ reduzierte Bremsdruck $C_2$ während der Anfangsphase kontinuierlich erhöht werden, bis bei einer vorbestimmten reduzierten Fahrgeschwindigkeit $v_1$ der entsprechende, während der folgenden Endphase des Bremsvorganges konstant gehaltene Endbremsdruck $C_1$ erreicht ist.

Entsprechend dieser Darstellung kann der reduzierte Bremsdruck $C_2$ so gesteuert werden, dass die Bremsleistung P bis zum Erreichen der reduzierten Fahrgeschwindigkeit $v_1$ im wesentlichen konstant gehalten und erst während der Endphase des Bremsvorganges reduziert wird.Entsprechend kann die aufzubringende Bremsleistung P in einer vorteilhaft kurzen Zeitspanne und bei vorteilhalft geringer Beanspruchung der Bremsklötze und der Räder erbracht werden.

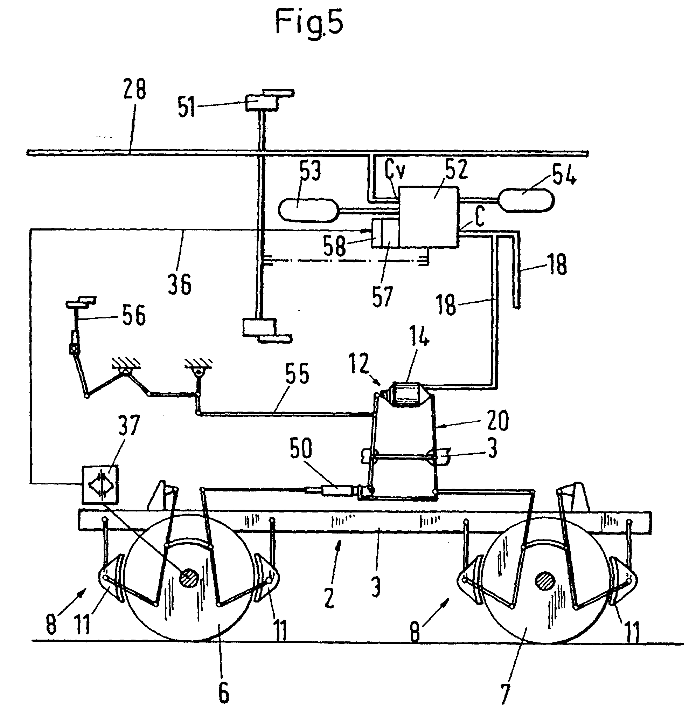

Die Fig.5 zeigt eine von zwei Bremseinrichtungen eines Güterwagens in einer vereinfachten Teildarstellung, wobei in den Fig.2 und 5 einander entsprechende Teile mit gleichen Bezugszeichen versehen sind. Die Bremseinrichtungen sind je einem Drehgestell 2 zugeordnet und enthalten je ein mit einem Lastwechselhebel 51 gekoppeltes, über ein Stellorgan 57 verstellbares Steuerventil 52 und zwei Betätigungsvorrichtungen 12, von denen nur eine dargestellt ist. Entsprechend dieser Darstellung kann an jeder Drehgestellseite ein Bremszylinder 14 vorgesehen sein, der über das mit einer Verstellvorrichtung 50 versehene Bremsgestänge 20 mit den der betreffenden Seite zugeordneten Bremsaggregaten 8 der Radsätze 6 und 7 gekoppelt ist. Das Bremsgestänge 20 kann über eine weitere Gestängeanordnung 55 mit einer von Hand betätigbaren Verstellspindel 56 gekoppelt sein, welche eine von der Druckluftversorgung unabhängige mechanische Betätigung der Bremsaggregate 8 ermöglicht. Das Steuerventil 52 ist an eine Zweigleitung der mit dem Triebfahrzeug verbundenen Hauptleitung 28 und an einen Vorratsluftbehälter 53 sowie an einen Steuerbehälter 54 und an die je mit einem der Bremszylinder 14 verbundenen Betätigungsleitungen 18 angeschlossen. Als Sensor 37 zum Erfassen der aktuellen Fahrgeschwindigkeit kann ein beliebiger Drehzahlgeber, gemäss Fig. 5 ein mit der Achse des Radsatzes 6 gekoppelter Fliehkraftregler, vorgesehen sein, dessen Signale über die Signalleitung 36 einer dem Stellorgan 57 zugeordneten Steuereinheit 58 zugeführt werden.

Das Steuerventil 52 kann über den Lastwechselhebel 51 zwischen einer bei voll beladenem Wagen einnehmbaren Vollaststellung und einer bei Leerfahrt einnehmbaren Teillaststellung umgeschaltet werden. Bei einer vom Triebfahrzeug aus eingeleiten Bremsung kann im Steuerventil 52 der in der Hauptleitung 28 eingestellte Vorsteuerdruck Cv mit dem im Steuerbehälter 54 herrschenden Druck verglichen werden, worauf bei einer vorbestimmten Druckdifferenz eine Verbindung zwischen dem Vorratsbehälter 53 und der Betätigungsleitung 18 hergestellt und in dieser ein dem Vorsteuerdruck Cv entsprechender Bremsdruck C erzeugt werden kann.Entsprechend den Signalen des Sensors 37 kann die Aussteuercharakteristik des Steuerventils 52 am Anschluss der Betätigungsleitung 18 verändert und damit der jeweils im Bremszylinder 14 zu erzeugende Bremsdruck C in Abhängigkeit von der aktuellen Fahrgeschwindigkeit beeinflusst werden. Dabei wird ebenfalls, wie vorstehend beschrieben, bei der höchsten auftretenden Fahrgeschwindigkeit ein auf einen vorbestimmten Bruchteil des zulässigen Maximalwertes reduzierter Bremsdruck $C_2$ , und beim Erreichen einer vorbestimmten, reduzierten Fahrgeschwindigkeit ein auf einen entsprechend vorbestimmten Wert erhöhter maximaler Bremsdruck $C_1$ erzeugt.

Zusammenfassend lässt sich die Erfindung wie folgt beschreiben:

Die Bremseinrichtung enthält mehrere mechanische Bremsaggregate mit Bremsklötzen aus einem Sinter- und/oder Kunststoffmaterial, welche je über einen pneumatischen Bremszylinder an eine Lauffläche eines Schienenrades anpressbar sind. Der Bremszylinder wird über eine Steuereinrichtung, in Abhängigkeit von Signalen eines die jeweilige Fahrgeschwindigkeit erfassenden Sensors, während einer Anfangsphase des Bremsvorganges mit einem reduzierten Bremsdruck angesteuert, der einem vorbestimmten Bruchteil eines zur Erzeugung eines vorbestimmten maximalen Bremskraft erforderlichen Bremsdrucks entspricht. Nach Erreichen einer vorbestimmten reduzierten Fahrgeschwindigkeit, zumindest während einer Endphase des Bremsvorganges, wird der Bremszylinder mit dem maximalen Bremsdruck angesteuert. Dadurch kann jeder Fahrgeschwindigkeit eine bestimmte Anpresskraft zugeordnet werden, welche in jeder Phase des Bremsvorganges die Einhaltung einer vorgegebenen zulässigen Bremsleistung, und damit einer zulässigen thermischen Beanspruchung des Radkranzes und der Bremsklötze gewährleistet.

**Patentansprüche**

**1.** Verfahren zum Betrieb einer Bremseinrichtung eines Schienenfahrzeuges, mit mehreren, je zur Ausübung einer vorbestimmten maximalen Bremskraft ausgelegten mechanischen Bremsaggregaten (8), welche je mindestens einen mit einer Betätigunsvorrichtung (12) verbundenen Bremsklotz (11) enthalten, der jeweils bei einem Bremsvorgang an eine rotierende Bremsfläche des Fahrzeuges angepresst wird, **dadurch gekennzeichnet, dass** bei Verwendung von Bremsklötzen (11) aus einem Sinter- und/oder Kunststoffmaterial die Betätigungsvorrichtung (12) über eine Steuereinrichtung (23, 52) in Abhängigkeit von der jeweiligen Fahrgeschwindigkeit (v) des Fahrzeuges so angesteuert wird, dass über den Bremsklotz (11) während einer. Anfangsphase des Bremsvorganges eine einem vorbestimmten Bruchteil der maximalen Bremskraft entsprechende, reduzierte Anpresskraft ($F_2$) übertragen wird und während einer Endphase des Bremsvorganges, nach Erreichen einer vorbestimmten, reduzierten Fahrgeschwindigkeit ($v_1$), eine der maximalen Bremskraft entsprechende, maximale Anpresskraft ($F_{max}$) übertragen wird.

**2.** Verfahren nach Anspruch 1, **dadurch gekennzeichnet, dass** die reduzierte Anpresskraft ($F_2$) des Bremsklotzes zumindest während eines Teils der Anfangsphase des Bremsvorganges konstant gehalten und nach Erreichen mindestens eines vorbestimmten Wertes der reduzierten Fahrgeschwindigkeit ($v_1$) stufenweise erhöht wird.

**3.** Verfahren nach Anspruch 1, **dadurch gekennzeichnet, dass** die reduzierte Anpresskraft ($F_2$) des Bremsklotzes (11) zumindest während eines Teils der Anfangsphase des Bremsvorganges entsprechend der abnehmenden Fahrgeschwindigkeit (v) kontinuierlich gegen den vorbestimmten Maximalwert der Anpresskraft ($F_{max}$) erhöht wird.

**4.** Verfahren nach einem der Ansprüche 1 bis 3, **dadurch gekennzeichnet, dass** auf die Steuereinrichtung (23, 52) Signale mindestens eines Sensors (37, 37') übertragen werden, welche der jeweiligen Fahrgeschwindigkeit (v) entsprechen, dass diese Signale einer Steuereinheit (22, 58) zugeführt und in dieser mit Referenzdaten verglichen werden, welche je einem vorbestimmten Sollwert der Fahrgeschwindigkeit (v) entsprechen, und dass auf die Steuereinrichtung (23, 52) Steuersignale zum Anpassen der auf den Bremsklotz (11) zu übertragenden Anpresskraft (F) an die jeweilige Fahrgeschwindigkeit (v) übertragen werden.

**5.** Bremseinrichtung mit mindestens einem Bremsaggregat (8) zur Durchführung des Verfahrens nach einem der Ansprüche 1 bis 4, bei welchem der Bremsklotz (11) aus einem Sinter- und/oder Kunststoffmaterial besteht und die Steuereinrichtung (23, 52) eine Steuereinheit (22, 58) enthält, welche in Abhängigkeit von Eingangssignalen, die der jeweiligen Fahrgeschwindigkeit (v) des Fahrzeuges entsprechen, zum Übertragen von Steuersignalen bestimmt ist, über welche die auf den Bremsklotz (11) zu übertragende Anpresskraft (F) beeinflussbar ist, wobei die Steuereinheit (22, 58) so geschaltet ist, dass einem ersten Eingangssignal, welches einer vorbestimmten maximalen Fahrgeschwindigkeit ($v_{max}$) entspricht, ein Steuersignal zugeordnet ist, welches einer auf einen vorbestimmten Bruchteil eines vorbestimmten Maximalwerts reduzierten Anpresskraft ($F_2$) entspricht, und einem folgenden Eingangssignal, welches einer vorbestimmten reduzierten Fahrgeschwindigkeit ($v_1$) entspricht, ein Steuersignal zugeordnet ist, welches einer auf den vorbestimmten Maximalwert erhöhten maximalen Anpresskraft ($F_{max}$) entpricht.

**6.** Bremseinrichtung nach Anspruch 5, bei der das Steuerelement (22, 58) an mindestens einen einem Rad des Fahrzeuges zugeordneten Sensor (37, 37') angeschlossen ist, über den jeweils ein der Drehzahl des Rades entsprechendes Signal auf die Steuereinheit (22, 58) übertragbar ist.

**7.** Bremseinrichtung nach Anspruch 5 oder 6, bei der die dem Bremsklotz (11) zugeordnete Bremsfläche eine Laulffläche eines Schienenrades ist.

**8.** Schienenfahrzeug mit mindestens einer Bremseinrichtung (10) nach einem der Ansprüche 5 bis 7.

**Claims**

**1.** A method for operating a braking system of a rail vehicle, with several mechanical braking aggregates (8) each designed to exert a preset maximum braking force, each having at least one brake block (11) connected with an actuator device (12), which is pressed against a rotating braking surface of the vehicle during a respective braking process, **characterized in that**, when using brake blocks (11) made out of a sintered and/or plastic material, the actuator device (12) is operated via a controller device (23, 52) as a function of the respective traveling velocity (v) of the vehicle in such a way that a reduced application force ($F_2$) corresponding to a preset fraction of the maximum breaking force is conveyed via the brake block (11) during an initial phase of the braking process, and a maximum application force ($F_{max}$) corresponding to the maximum braking force is conveyed during a final phase of the braking process, after a preset, reduced traveling velocity ($v_1$) has been reached.

**2.** The method according to claim 1, **characterized in that** the reduced application force ($F_2$) of the brake block is held constant at least during part of the initial phase of the braking process, and incrementally increased after at least one preset value of the reduced traveling velocity ($v_1$) has been reached.

**3.** The method according to claim 1, **characterized in that** the reduced application force ($F_2$) of the brake block (11) is continuously increased toward the preset maximum value of the application force ($F_{max}$) at least during a part of the initial phase of the braking process in accordance with the decreasing traveling velocity (v).

**4.** The method according to one of claims 1 to 3, **characterized in that** signals from at least one sensor (37, 37') that correspond to the respective traveling velocity (v) are transmitted to the controller device (23, 52), that these signals are supplied to a control unit (22, 58) and compared with reference data therein, which each correspond to a predetermined setpoint value for the traveling velocity (v), and that control signals are transmitted to the controller device (23, 52) for adjusting the application force (F) to be conveyed to the brake block (11) to the respective traveling velocity (v).

5. A braking system with at least one braking aggregate (8) for executing the method according to one of claims 1 to 4, in which the brake block (11) consists of a sintered and/or plastic material, and the controller device (23, 52) contains a control unit (22, 58), which is intended, as a function of input signals corresponding to the respective traveling velocity (v) of the vehicle, for transmitting control signals, which can be used to influence the application force (F) to be conveyed to the brake block (11), wherein the control unit (22, 58) is connected in such a way that a control signal, which corresponds to an application force ($F_2$) reduced to a preset fraction of a predetermined maximum value, is allocated to a first input signal, which corresponds to a preset maximum traveling velocity ($v_{max}$), and a control signal, which corresponds to a maximum application force ($F_{max}$) elevated to the preset maximum value, is allocated to a subsequent input signal, which corresponds to a preset reduced traveling velocity ($v_1$).

6. The braking system according to claim 5, in which the control unit (22, 58) is connected to at least one sensor (37, 37') allocated to a wheel of the vehicle, via which a respective signal corresponding to the speed of the wheel can be transmitted to the control unit (22, 58).

7. The braking system according to claim 5 or 6, in which the braking, surface allocated to the brake block (11) is the running surface of a rail wheel.

8. A rail vehicle with at least one braking system (10) according to one of claims 5 to 7.

**Revendications**

1. Procédé pour opérer un système de freinage d'un véhicule sur rails, avec plusieurs ensembles de freinage (8) mécaniques conçus pour l'exercice d'une force de freinage maximale prédéfinie, lesquels ensembles contiennent chacun au moins une plaquette de frein (11) reliée à un dispositif d'actionnement (12), qui est pressée respectivement lors d'une opération de freinage sur une surface de freinage rotative du véhicule, **caractérisé en ce que**, en cas d'utilisation de plaquettes de frein (11) à base d'un matériau fritté et/ou de matériau plastique, le dispositif d'actionnement (12) est amorcé au moyen d'un dispositif de commande (23, 52) en fonction de la vitesse de roulement (v) respective du véhicule de façon qu'une force d'appui ($F_2$) réduite et correspondant à une fraction prédéfinie de la force de freinage maximale est transmise au moyen de la plaquette de frein (11) pendant une phase initiale de l'opération de freinage et une force d'appui ($F_{max}$) maximale et correspondant à la force de freinage maximale est transmise pendant une phase finale de l'opération de freinage, après avoir atteint une vitesse de roulement (v1) réduite et prédéfinie.

2. Procédé selon la revendication 1, **caractérisé en ce que** la force d'appui ($F_2$) réduite de la plaquette de frein est maintenue constante au moins pendant une partie de la phase initiale de l'opération de freinage et est augmentée graduellement après avoir atteint au moins une valeur prédéfinie de la vitesse de roulement réduite ($v_1$).

3. Procédé selon la revendication 1, **caractérisé en ce que** la force d'appui réduite ($F_2$) de la plaquette de frein (11) est augmentée de façon continue vers la valeur maximale prédéfinie de la force d'appui ($F_{max}$) au moins pendant une partie de la phase initiale de l'opération de freinage et en correspondance avec la vitesse de roulement (v) décroissante.

4. Procédé selon au moins l'une quelconque des revendications 1 à 3, **caractérisé en ce que** des signaux d'au moins un capteur (37, 37') qui correspondent à la vitesse de roulement (v) respective, sont transmis au dispositif de commande (23, 52), **en ce que** ces signaux sont amenés à une unité de commande (22, 58) et sont comparés dans celle-ci avec des données de référence, qui correspondent à une valeur de consigne prédéfinie de la vitesse de roulement (v), et **en ce que** des signaux de commande pour l'adaptation de la force d'appui (F) à transmettre à la plaquette de frein (11) à la vitesse de roulement (v) respective sont transmis au dispositif de commande (23, 52).

5. Système de freinage avec au moins un ensemble de freinage (8) pour l'application du procédé selon l'une quelconque des revendications 1 à 4, avec lequel la plaquette de frein (11) est à base d'un matériau fritté et/ou de matériau plastique et le dispositif de commande (23, 52) contient une unité de commande (22, 58) qui est destinée, en fonction de signaux d'entrée qui correspondent à la vitesse de roulement (v) du véhicule, à la transmission de signaux de commande par lesquels on peut influer sur la force d'appui (F) à transmettre à la plaquette de frein (11), l'unité de commande (22, 58) étant commutée de façon qu'à un premier signal d'entrée, qui correspond à une vitesse de roulement ($v_{max}$) maximale et prédéfinie, est attribué un signal de commande, qui correspond à une force d'appui ($F_2$) réduite à une fraction prédéfinie d'une valeur maximale prédéfinie, et à un signal d'entrée suivant, qui correspond à une vitesse de roulement ($v_1$) réduite et prédéfinie, est attribué un signal de commande qui correspond à une force d'appui ($F_{max}$) maximale élevée à la valeur maximale prédéfinie.

6. Système de freinage selon la revendication 5, sur lequel l'élément de commande (22, 58) est raccordé à au moins un capteur (37, 37') attribué à une roue du véhicule, capteur par lequel respectivement un signal approprié au régime de la roue peut être transmis à l'unité de commande (22, 58).

7. Système de freinage selon la revendication 5 ou 6, sur lequel la surface de freinage attribué à la plaquette de frein (11) est une surface de roulement d'une roue sur rail.

8. Véhicule sur rails avec au moins un système de freinage (10) selon l'une des revendications 5 à 7.

Fig.1

Fig2

Fig.3

Fig.4

# Fig.5